# EUROPÄISCHE PATENTANMELDUNG

(11) **EP 1 176 690 A2**
(43) Veröffentlichungstag der Anmeldung: **30.01.2002**
(21) Anmeldenummer: 01118290.4
(22) Anmeldetag: 30.07.2001
(51) Int. Cl.: H02J 3/14

(54) **Vorrichtung und Verfahren zur Verteilung von elektrischer Last auf eine Vielzahl von Lastverbrauchsvorrichtungen**

(30) Priorität: 28.07.2000 DE 10036866
(71) Anmelder: Pfrieme, Thomas, 06268 Querfurt (DE)
(72) Erfinder: Pfrieme, Thomas, 06268 Querfurt (DE)
(74) Vertreter: HOFFMANN - EITLE

(57) **Zusammenfassung**

Vorrichtung zur Verteilung von elektrischer Last auf eine Vielzahl von Lastverbrauchsvorrichtungen, umfassend eine Einrichtung zur Bereitstellung von Informationen betreffend den Betriebszustand jeder Lastverbrauchsvorrichtung, und eine Steuereinrichtung, welche mit der Einrichtung zur Bereitstellung von Informationen verbunden ist, um die Informationen zu empfangen, und welche ausgebildet ist abhängig von dem durch die Informationen definierten Gesamtzustand und ohne direkte Messung der tatsächlichen Last Laststeuersignale zur Beeinflussung des Betriebszustands zumindest eines Teils der Lastverbrauchsvorrichtungen zu erzeugen.

## Beschreibung

Die vorliegende Erfindung bezieht sich auf eine Vorrichtung und ein Verfahren zur Verteilung von elektrischer Last bzw. elektrischer Leistung auf eine Vielzahl von Lastverbrauchern. Der Verwendungszweck ist hierbei die Lastoptimierung, z.B. bei gewerblichen elektrischen Anlagen.

Für Energiekunden, deren Leistungsverbrauch eine bestimmte Größe überschreitet, wird ein Maximum- oder Spitzenlasttarif festgelegt. Dieser Tarif gilt in der Regel bei Leistungen größer 30 kW und ist abhängig von den jeweiligen Energieversorgungsunternehmen (EVU). In anderen Worten, die Tarifordnungen der EVUs sind gewöhnlich so ausgelegt, dass der Stromkunde einen bestimmten Grundtarif bezahlt solange eine bestimmte Schwelllast nicht überschritten wird, und eine Überschreitung mit einem erhöhten Preis "bestraft" wird. Sinn und Zweck solcher Tarifordnungen ist es, den Kunden möglichst hin zu einem gleichmäßigen Energieverbrauch zu orientieren, da auch die EVUs an einer möglichst gleichmäßigen und berechenbaren Energieabgabe interessiert sind.

Um die Überschreitung einer Schwelle in der Gesamtlast bei einer technischen Anlage mit einer Vielzahl von Verbrauchsgeräten zu vermeiden, sind verschiedene Geräte entwickelt worden. Als einfachstes Mittel zur Vermeidung von Schwelllastüberschreitungen einer Vielzahl von Verbrauchsgeräten sind sogenannte einstellbare Lastabrufgeräte bekannt, wie z.B. das Gerät LA-3G 465 91 der Fa. Eberle. Dieses im Handel erhältliche Gerät erlaubt den Anschluss von drei Verbrauchergruppen, deren Stromzuführung jeweils unterbrochen werden kann. Das Gerät misst den Gesamtstrom (die Gesamtlast) und vergleicht diesen mit einer eingestellten Schwelle. Den drei Verbrauchergruppen sind feste Prioritäten zugewiesen, und wenn eine Schwellwertüberschreitung stattfindet, wird die Gruppe niedrigster Priorität als erstes abgeworfen. Wenn dann immer noch eine Überschreitung der Lastschwelle vorliegt, wird die Gruppe der nächsthöheren Priorität abgeworfen, und wenn schließlich immer noch eine Überschreitung vorliegt, wird die letzte Gruppe abgeworfen. Ein solches einstellbares Abwurfgerät ermöglicht zwar die Einstellung der Schwelle und die Zuweisung bestimmter Prioritäten zu bestimmten Geräten, hat aber den Nachteil, dass es darüber hinaus überhaupt keine Intelligenz aufweist. Es hat insbesondere den Nachteil, dass nur Verbraucher angeschlossen werden können, die für den Betrieb nicht kritisch sind, d.h. die ohne Schaden bei Überschreitung der Schwelle abgeschaltet werden können. In anderen Worten, Geräte, die für den geregelten Betriebsablauf einer gewerblichen Anlage notwendig sind (wie z.B. Beleuchtung) oder für die Sicherheit, welche durchaus einen sehr hohen Strombedarf haben können, können nicht in den Prozess zur Vermeidung von Schwellwertüberschreitungen einbezogen werden, was den Nutzen solcher Lastabwurfgeräte stark mindert.

Neben solchen einfachen Lastabwurfgeräten sind auch sogenannte programmierbare Maximumwächter bekannt, z.B. das Gerät MX/A 14.2 der Fa. ABB Stotz-Kontakt GmbH oder das Gerät WA-Max 3000 der Fa. Walcher. Das Gerät MX/A 14.2 ist programmierbar und führt eine ständige Messung der Momentanleistung durch, um eine Trendberechnung des Lastverbrauchs vorzunehmen. Die Trendberechnung liefert eine Korrekturleistung, welche bei einem negativen Wert zu einer Abschaltung (gemäß des gespeicherten Programms) von bestimmten Geräten führt, und bei einem positiven Wert zu einer Zuschaltung. Die Ab- oder Zuschaltung erfolgt nach einer festen Priorität, d.h. einer Rangfolge, nach der die Verbraucher einbezogen werden sollen. In der Gerätebeschreibung wird ausdrücklich erwähnt, dass nur Anlagen angeschlossen werden können, die nicht unmittelbar der Sicherheit dienen oder zur Aufrechterhaltung des laufenden Betriebs notwendig sind.

Bei dem Gerät EKS 5/16, das von der Mikroelektronik-Systembetreuung GmbH angeboten wird, ist eine digitale Rückmeldung von bestimmten Produktionsmaschinen vorgesehen.

Die bekannten Maximumwächter haben daher alle die Eigenschaft, dass sie eine ständige Messung der verbrauchten Last vornehmen, welche dann als Grundlage für eine Trendberechnung betreffend die zukünftige Last verwendet wird, wobei diese Trendberechnung in Übereinstimmung mit einstellbaren Programmen vollzogen werden kann, welche unter Umständen Betriebsparameter berücksichtigen können, und wobei schließlich abhängig vom Ergebnis der Trendberechnung einzelne angeschlossene Verbraucher abgeworfen werden, je nach deren eingestellter Priorität.

Auch hier besteht der Nachteil, dass nur unkritische Geräte angeschlossen werden können, die ohne weiteres abgeschaltet werden können. Auch ist allen Geräten gemeinsam, dass die Prioritätszuweisung zu den Einzelverbrauchern fest ist.

In dem Artikel "Hochrechner ohne Sperrzeiten" aus "Elektrische Energietechnik" 6/1990, S. 22-24, Dr. Alfred Hüthig Verlag GmbH, Heidelberg, wird das grundsätzliche Problem angesprochen, dass die zuvor genannten Maximumwächter zwar zu Optimierungsanlagen ausgebaut werden können, dass aber eine komplizierte Steuerungsoptimierung die Bedienung schwierig macht. Zur Vermeidung des Problems einer zu komplizierten Programmierung schlägt der Artikel vor, dass ein Maximumwächter zusammen mit einer speicherprogrammierbaren Steuerung (SPS) verwendet wird, wobei der Maximumwächter die Rolle einer primären Intelligenz spielt, welche die Trendberechnung und den Vergleich der verbrauchten Energie mit einem vorgegebenen Schwellwert vornimmt, während die SPS zusätzliche Störgrößen bearbeitet, wie die Abfrage von Temperaturen, Drücken, usw., um damit als sekundäre Intelligenz zu dienen.

Der Artikel "Lastmanagement mit dem EIB" in der Zeitschrift Der Elektropraktiker 12-99, Verlag Technik (ISSN-0013-5569) schlägt dagegen einen einzigen Lastcontroller vor, der auf der Grundlage des sogenannten europäischen Installationsbusses (EIB) ein definiertes Lastmanagement erlaubt. Dieses Gerät führt einen Ist/Soll-Vergleich betreffend die tatsächlich verbrauchte Last durch, wobei die Zu- oder Abschaltung von Geräten abhängig von der Position des gemessenen Werts zwischen einer sogenannten Sollwertgerade und einer Wiedereinschaltgerade gesteuert wird. Der beschriebene Lastcontroller erhält Informationen über das Ein- oder Ausschalten von Geräten mittels von sogenannten Einschalttelegrammen bzw. Ausschalttelegrammen, wobei ein Einschalttelegramm eine Last beim Lastcontroller anmeldet, und ein Ausschalttelegramm diese Last wieder abmeldet. Nur angemeldete Lasten werden bei Zwangsabschaltungen bzw. Wiederzuschaltungen durch den Lastcontroller berücksichtigt. Wird vom Lastcontroller ein Einschalttelegramm empfangen, so ist die zugehörige Last angemeldet. Droht zu diesem Zeitpunkt die Überschreitung der Bereitstellungsleistung durch die mittlere Leistung innerhalb der Messperiode, so wird die Last zunächst nicht zugeschaltet. Erst nach dem Erreichen der Wiedereinschaltgeraden wird das Einschalttelegramm an die Last weitergereicht.

Aufgabe der vorliegenden Erfindung ist die Schaffung einer verbesserten Vorrichtung bzw. eines verbesserten Verfahrens zur Verteilung von elektrischer Last auf eine Vielzahl von Lastverbrauchsvorrichtungen.

Diese Aufgabe wird durch die in den unabhängigen Ansprüchen beschriebenen Gegenstände gelöst. Vorteilhafte Ausführungen ergeben sich aus den abhängigen Ansprüchen.

Erfindungsgemäß geschieht die Lastverteilung mit Hilfe einer Steuereinrichtung, welche Informationen betreffend den Betriebszustand der Lastverbrauchsvorrichtungen empfängt, wobei Laststeuersignale zur Beeinflussung des Betriebszustands zumindest einen Teil der Lastverbrauchsvorrichtungen erzeugt wird auf der Grundlage des durch die Informationen definierten Gesamtzustands, ohne direkte Messung der tatsächlichen Gesamtlast bzw. verbrauchten Gesamtleistung.

Erfindungsgemäß kann also auf die bei allen Systemen des Standes der Technik verwendete direkte Messung der Gesamtlast, sei es zur Durchführung eines Ist/Soll-Vergleichs oder als Grundlage einer Trendberechnung, verzichtet werden.

Vorzugsweise umfasst das System der Erfindung Sensoren bzw. Signalgeber, welche das Ein/Ausschalten von Lastverbrauchsvorrichtungen erfassen, und ein entsprechendes Signal an die Steuerung geben. In anderen Worten, in diesem Fall ist die Information betreffend den Betriebszustand eine Information über den Einschaltzustand. Auf der Grundlage des Ein/Aus-Zustands aller Lastverbraucher kann dann die Steuerung Last verteilen.

Solche Sensoren können z.B. Lastabwurfrelais sein, welche jeweils in den Stromkreis einer zugehörigen Lastverbrauchsvorrichtung geschaltet sind. Vorzugsweise werden diese Lastabwurfrelais direkt hinter die Hauptsicherung des entsprechenden Lastverbrauchers geschaltet, so dass eine ebenfalls dort in der Nähe vorgesehene Steuerung einfach und mit kurzer Verkabelung angeschlossen werden kann. Es ist ebenfalls möglich, die Laststeuersignale an Stromkreis-Unterbrechungsschalter auszugeben, z.B. steuerbare Schütze, die ebenfalls in den Stromkreis eines entsprechenden Lastverbrauchers geschaltet sind. Werden diese Unterbrechungsschalter ebenfalls in der Nähe der oben erwähnten Lastabwurfrelais und der Steuerung angeordnet, erhält man eine sehr kompakte und einfach zu installierende Struktur.

Es ist allerdings auch möglich, den Datenaustausch in die Steuerung bzw. aus der Steuerung heraus mit Hilfe von einem oder mehreren Datenbussen zu verwirklichen. Dies kann z.B. mit dem oben erwähnten EIB verwirklicht werden. Ebenfalls ist es möglich, dass eine gemischte Struktur vorgesehen wird, bei welcher einige Lastverbraucher über einen Datenbus mit der Steuerung kommunizieren, während andere mit Hilfe der oben erwähnten Sensoren bzw. Stromkreisunterbrecher gesteuert werden.

Vorzugsweise ist die Steuerung eine speicherprogrammierbare Steuerung. In diesem Zusammenhang sei erwähnt, dass obwohl der oben genannte Artikel die Verwendung einer SPS in Zusammenhang mit Laststeuerung erwähnt, dieser Artikel nicht auf die Messung der Gesamtlast verzichtet, im Gegensatz zur vorliegenden Erfindung.

Gemäß einer bevorzugten Ausführung werden Beleuchtungskörper einer Beleuchtungsanlage so gruppiert, dass sie eine vorbestimmte Zahl von Lastverbrauchsvorrichtungen bilden.

Hierdurch ist es möglich, die unterschiedlichen Phasen einer Drehstromversorgung besser auszunutzen, und insbesondere ist es möglich, unter zusätzlicher Vorsehung von Schaltverzögerungen eine Einschaltspitze bei der Beleuchtungsanlage zu vermeiden, da nämlich der größte Strom bzw. Spitzenstrom direkt beim Einschalten der Beleuchtungskörper fließt, um dann kurze Zeit darauf einen deutlich niedrigeren Wert anzunehmen. Somit erzielt man den Effekt, dass eine Schwelllastüberschreitung vermieden werden kann, wenn eine Beleuchtungsanlage nicht so eingeschaltet wird, dass alle Beleuchtungskörper gleichzeitig eingeschaltet bzw. gezündet werden, sondern nacheinander in Gruppen. Ist nämlich die eine Gruppe bereits eingeschaltet und stabil, so hat deren Stromverbrauch bereits deutlich abgenommen, so dass dann die Spitze beim Einschalten der darauf folgenden Gruppe ohne weiteres toleriert werden kann.

Vorzugsweise wird das System der vorliegenden Erfindung zur Lastverteilung auf Lastverbraucher in einem Gewerbebetrieb angewendet. Als Beispiel sei eine Tankstelle erwähnt, bei welcher die entsprechenden Lastverbrauchsvorrichtungen elektrische Anlagen sind, wie z.B. eine Waschanlage, ein Ofen für Backwaren, die Beleuchtung, ein Wasserboiler, eine Pumpanlage, usw. Die vorliegende Erfindung ist jedoch nicht hierauf beschränkt, sondern kann allgemein zur Lastverteilung eingesetzt werden, z.B. zur Lastverteilung innerhalb eines einzelnen Haushalts, wobei dann die Lastverbrauchsvorrichtungen vorbestimmte Anschlüsse sind, z.B. die Anschlüsse für eine Waschmaschine, für einen Elektroherd, für einen Kühlschrank, usw., oder aber kann die vorliegende Erfindung auch in größerem Maßstab angewendet werden, z.B. zur Lastverteilung auf eine Vielzahl von Häusern in einer Wohnanlage (d.h. die einzelnen Häuser sind dann die Lastverbrauchsvorrichtungen). Gerade in einem solchen breiten Anwendungsgebiet liegt ein großer Vorteil der vorliegenden Erfindung, weil eine große Flexibilität gewährleistet ist, und aufgrund der Tatsache, dass keine direkte Messung der Gesamtlast vorgenommen wird, ist eine entsprechende Abhängigkeit zur Dimensionierung von Messgeräten nicht notwendig. Vielmehr müssen nur die oben erwähnten Sensoren bzw. Stromkreisunterbrecher den entsprechenden Leistungen angepasst sein, während als Steuerung immer die gleiche Anordnung verwendet werden kann, vorzugsweise eine handelsübliche speicherprogrammierbare Steuerung (SPS).

Ein weiterer Vorteil der vorliegenden Erfindung besteht darin, dass alle Lastverbraucher in das Steuerungssystem einbezogen sein können, im Gegensatz zum Stand der Technik, bei dem nur unkritische Geräte einbezogen werden konnten. Dadurch ist eine weit verbesserte Effizienz erzielbar.

Nun wird die vorliegende Erfindung auf der Grundlage von bevorzugten Ausführungen beschrieben, unter Bezugnahme auf die begleitenden Zeichnungen, in welchen:
- Fig. 1: ein schematisches Beispiel der vorliegenden Erfindung zeigt,
- Fig. 2: ein schematisches Beispiel der Steuerung zeigt, und
- Fig. 3: Steuerungsbeispiele zeigt.

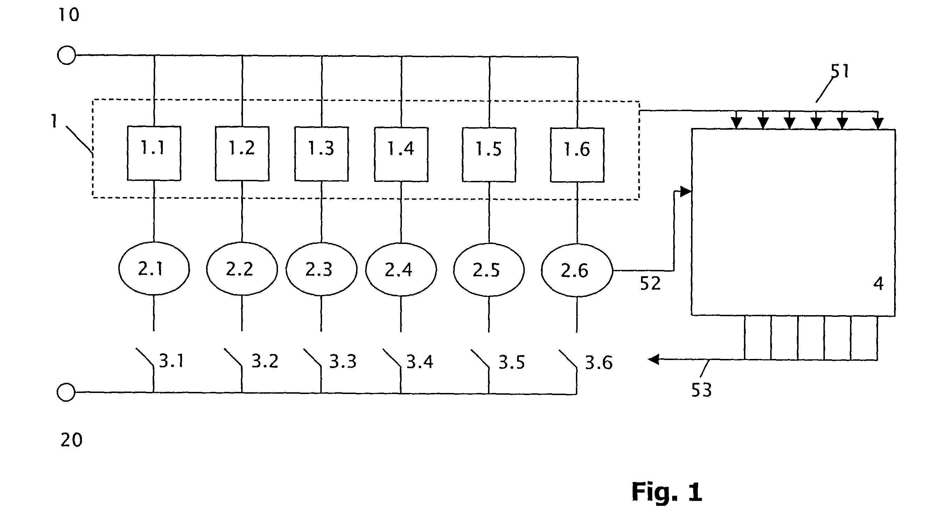

Fig. 1 zeigt eine schematische Ansicht einer Ausführung der vorliegenden Erfindung. Die Bezugszeichen 10 und 20 bezeichnen Anschlüsse an ein äußeres Lastversorgungsnetz, üblicherweise das durch ein EVU bereitgestellte Netz. Obwohl in Fig.1 nur zwei Anschlüsse abgebildet sind, sei darauf hingewiesen, dass die Zeichnung nur schematisch zu verstehen ist und jede Form von Lastanschluss einschließt, seien es einphasige oder dreiphasige (Drehstrom).

Weiterhin abgebildet sind Lastverbrauchsvorrichtungen 2.1, 2.2, ... 2.6. Der Begriff "Lastverbrauchsvorrichtung" ist in Zusammenhang mit der vorliegenden Beschreibung allgemein zu verstehen, d.h. er schließt jede Einrichtung ein, die eine elektrische Last verbrauchen kann. Als Beispiel, wenn die vorliegende Erfindung in einem Gewerbebetrieb wie einer Tankstelle angewendet wird, könnten die Lastverbrauchsvorrichtungen 2.1 - 2.6 elektrische Anlagen sein, wie eine Pumpanlage, eine Waschstraße, ein Backofen, ein Heißwasserboiler, usw. Wie bereits erwähnt, können die Lastverbrauchsvorrichtungen jedoch auch z.B. einzelne Anschlüsse in einem Haushalt sein, oder aber auch ganze Haushalte.

Das Bezugszeichen 1 bezeichnet eine Einrichtung zur Bereitstellung von Informationen betreffend den Betriebszustand der Lastverbrauchsvorrichtungen 2.1 - 2.6. Die Einrichtung 1 gibt allgemein diese Informationen an eine Steuereinrichtung 4, wie durch die Pfeile 51 schematisch angegeben. Die Steuereinrichtung 4 erzeugt abhängig von dem durch die Informationen definierten Gesamtzustand, aber ohne direkte Messung der tatsächlich verbrauchten Gesamtlast, Laststeuersignale zur Beeinflussung des Betriebszustands zumindest eines Teils der Lastverbrauchsvorrichtungen 2.1 - 2.6, was durch den Ausgangspfeil 53 in Fig. 1 angedeutet ist.

Die Laststeuersignale 53 können in jeder geeigneten Form ausgegeben werden, d.h. direkt an die Lastverbraucher 2.1 - 2.6, an eigens zu diesem Zweck eingerichtete Stromkreisunterbrecher, die in Fig. 1 als Schalter 3.1 - 3.6 angedeutet sind, oder auf jede andere der konkreten Aufgabe angemessenen Art. Es ist auch möglich, dass die Laststeuersignale teils an eigens vorgesehene Unterbrecher gehen, teils direkt an die Lastverbraucher. Eine Signalabgabe direkt an die Lastverbraucher ist dann möglich, wenn diese Lastverbraucher über entsprechende Signaleingänge verfügen, um das Laststeuersignal zu empfangen und zu verarbeiten. Umgekehrt, bei solchen Lastverbrauchern, welche keine entsprechenden Signaleingänge bzw. keine zur Verarbeitung solcher Signale geeignete Steuerelektronik besitzen, ist eine Zulassung bzw. Unterbindung des Betriebs über einen Stromkreisunterbrechungsschalter, der in den elektrischen Kreis der zugehörigen Lastverbrauchsvorrichtung geschaltet ist, möglich.

Somit liegt ein Vorteil in der Verwendung solcher Stromkreisunterbrechungsmittel in der Tatsache, dass diese mit beliebigen Lastverbrauchern eingesetzt werden können, insbesondere mit solchen, die die Signale selbst nicht verarbeiten können. Ein weiterer Vorteil des Einsatzes von Stromkreisunterbrechungsmitteln, z.B. von steuerbaren Schützen, liegt in der einfachen Montage, da die entsprechenden Unterbrechungsschalter in der Nähe der Lastanschlüsse 10, 20 bzw. den Hauptsicherungen (nicht abgebildet) der Lastverbraucher angeordnet werden können, zusammen mit der Steuerung 4. Dies erleichtert die Montage und vermeidet einen hohen Verkabelungsaufwand.

Die Einrichtung 1 zur Bereitstellung von Informationen kann grundsätzlich auf beliebige Art und Weise ausgebildet sein, so lange die entsprechenden Informationen bereitgestellt werden. Beispielsweise können entsprechende Signalausgänge der Lastverbraucher 2.1 - 2.6, welche Betriebszustandinformation ausgeben, die Einrichtung 1 bilden bzw. einen Teil der Einrichtung 1 bilden. Eine andere Möglichkeit zur Bereitstellung der Information betreffend den Betriebszustand besteht darin, gesonderte Sensoren bzw. Signalgeber 1.1 - 1.6 vorzusehen, welche das Ein/Ausschalten von zugeordneten Lastverbrauchern 2.1 - 2.6 erfassen. Ein Beispiel für solche Sensoren bzw. Signalgeber sind Lastabwurfrelais, d.h. Schalteranordnungen, bei welchen ein Stromdurchfluss zu einem Schließen eines Sekundärschalters führt, woraus ein einfaches Signal gewonnen wird, das der Steuerung 4 zugeführt werden kann.

Genauer gesagt werden die Sensoren einfach in den Stromkreis des entsprechenden Lastverbrauchers geschaltet, wie durch die Elemente 1.1 - 1.6 im Verhältnis zu den Verbrauchern 2.1 - 2.6 in Fig. 1 angedeutet, so dass der Beginn eines Stromflusses zum entsprechenden Verbraucher von der Steuerung 4 festgestellt werden kann. Abhängig von dem durch alle Sensorsignale definierten Gesamtzustand generiert dann die Steuerung 4 Ausgangssignale, z.B. zu einem oder mehreren Stromkreisunterbrechungsschaltern 3.1 - 3.6. Wenn einer der Sensoren 1.1 - 1.6 den Beginn eines Stromflusses registriert, und dies als Signal der Steuerung 4 mitteilt, muss die Steuerung so ausgebildet sein, dass sie vor einem nennenswerten Anstieg des Stroms bereits ein Ausgangssignal erzeugen kann, z.B. um den Stromfluss zu unterbrechen, wenn der Gesamtzustand so ist, dass ein Stromfluss zum neuen Verbraucher eine Überschreitung der Schwelllast bedeuten würde. Eine handelsübliche speicherprogrammierbare Steuerung (SPS) erfüllt diese Vorgaben.

In Fig. 1 ist ebenfalls angedeutet, dass neben der Einrichtung 1 zur Bereitstellung von Informationen betreffend den Betriebszustand, die Lastverbraucher zusätzliche Informationen an die Steuerung 4 liefern können, wie durch den Pfeil 52 von der Einrichtung 2.6 zur Steuerung 4 beispielhaft angedeutet. Beispiele für solche Zusatzinformationen könnten zusätzliche Betriebsdaten sein, wie z.B. die Wassertemperatur eines Boilers, usw.

Obwohl es in Fig. 1 nicht abgebildet ist, können auch weitere Signalgeber vorgesehen sein, welche der Steuerung 4 Eingabesignale bereitstellen. Beispiele hierfür sind ein Dämmerungsschalter (um der Steuerung Informationen über die Lichtverhältnisse bereit zu stellen), oder ähnliche Messeinrichtungen. Auch kann ein Signaleingang an der Steuerung 4 vorgesehen sein, der Informationen betreffend das EVU-Netz empfängt, z.B. betreffend die Umschaltung tageszeitabhängiger Tarife o.ä.

Vorzugsweise handelt es sich bei der Steuerung 4 um eine speicherprogrammierbare Steuerung, deren Signaleingänge die Signale der Einrichtung 1 zur Bereitstellung von Informationen betreffend den Betriebszustand erhalten, und deren Ausgänge Laststeuersignale an entsprechende Einrichtungen ausgeben, z.B. an die in Fig. 1 angedeuteten Stromkreisunterbrechungsschalter 3.1 - 3.6 oder auch direkt an die Lastverbraucher. Bei dem in Fig. 1 angedeuteten Beispiel wären einfach jeder Sensor 1.1 - 1.6 mit einem jeweiligen Eingang der Steuerung 4 verbunden, und jeder Unterbrechungsschalter 3.1 - 3.6 mit einem jeweiligen Ausgang der Steuerung 4.

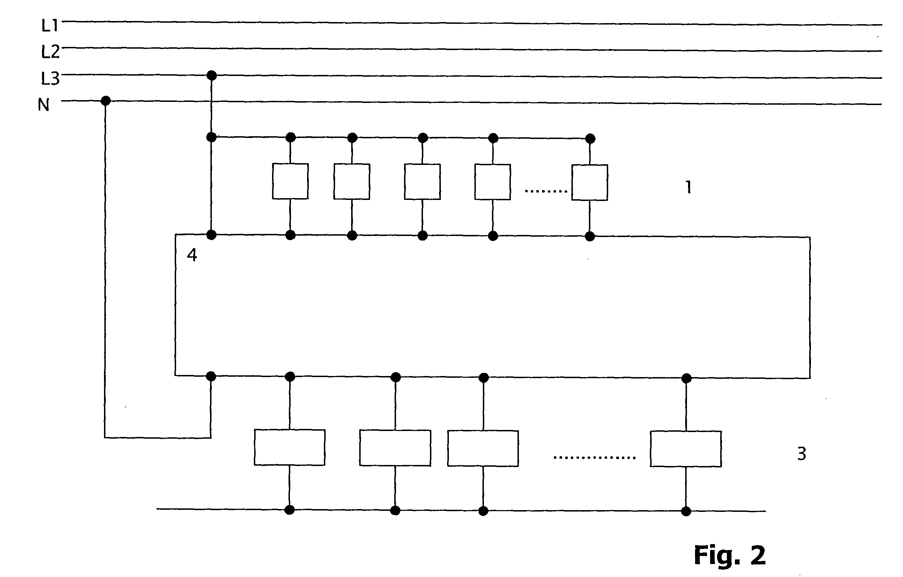

Dies ist auch in Fig. 2 angedeutet, welche die SPS 4 zeigt, sowie Eingabeelemente 1 und gesteuerte Betriebszustand-Beeinflussungsmittel 3 (die Lastverbraucher sind in Fig. 2 nicht abgebildet). Überdies zeigt Fig. 2 ein Beispiel mit Drehstromversorgung.

Die Programmierung der Steuerung 4 wird entsprechend den Gegebenheiten und Zielsetzungen des Bereichs bestimmt, in welchem die vorliegende Erfindung eingesetzt wird. Mit anderen Worten, die Programmierung ist immer individuell für die jeweiligen Anlagen und damit verbundenen Zielsetzungen zu bestimmen. Als Beispiel sei im folgenden ein Gewerbebetrieb in Form einer Tankstelle erwähnt, bei welcher die Lastverbraucher 2.1 - 2.6 elektrische Anlagen sind, wie z.B. eine Pumpe, eine Hebebühne, eine Lichtanlage, usw. Die Betriebszustandssignale der einzelnen Verbraucher, welche vorzugsweise einfache Ein/Aus-Signale von den jeweiligen Anlagen zugeordneten Lastabwurfrelais sind, stellen einen Gesamtzustand dar. Um einzuprogrammieren, welche Abhängigkeiten zwischen bestimmten Eingangssignalen (oder dem Fehlen von bestimmten Eingangssignalen) und bestimmten Laststeuersignalen am Ausgang bestehen, wird zunächst eine Analyse der zu steuernden Anlagen vorgenommen. In anderen Worten, es wird ermittelt, welcher Verbrauch mit jeder Anlage einher geht, um dann zu bestimmen, welche Anlagen gemeinsam betrieben werden können, ohne dass eine Überschreitung der Schwelllast stattfindet.

Man betrachte folgendes einfache Beispiel zur besseren Veranschaulichung: Wenn man durch Messung festgestellt hat, dass im Betrieb die Verbraucher 2.1 und 2.2 jeweils 3 kW verbrauchen, der Verbraucher 2.3 4 kW, der Verbraucher 2.4 10 kW, der Verbraucher 2.5 12 kW und der Verbraucher 2.6 15 kW, wenn man eine Schwelllast von 30 kW zugrunde legt, und wenn man als Zielvorgabe nur die Vermeidung der Schwelllastüberschreitung vorgibt, dann ergeben sich z.B. die folgenden Programmierungsbeispiele.

Der Ausgang der Steuerung 4, welcher den zum Lastverbraucher 2.6 gehörigen Unterbrecher 3.6 ansteuert, könnte z.B. auf solche Weise logisch mit den Eingängen der Steuerung 4 verknüpft sein (an welchen Ein/Aus-Signale für die jeweiligen Verbraucher anliegen), dass ein Gesamtzustand, der einen Einschaltzustand der Verbraucher 2.4 und 2.5 anzeigt, eine Sperrung der Vorrichtung 2.6 bewirken würde, z.B. eine Öffnung des Schalters 3.6, oder ein entsprechendes Hemmsignal direkt an die Vorrichtung 2.6, wenn diese zum Empfang und zur Verarbeitung eines solchen Signals ausgebildet ist. Hingegen könnte die logische Verknüpfung zwischen den Eingängen und Ausgängen für den Ausgang, der zum Schalter 3.6 führt, so sein, dass ein Gesamtzustand, bei dem nur die Vorrichtung 2.2 und die Vorrichtung 2.4 eingeschaltet sind, einem Betrieb der Vorrichtung 2.6 nicht entgegenstehen würde. In anderen Worten, die Programmierung der Steuerung 4 kann auch in Form von UND-Gattern bzw. ODER-Gattern in beliebiger Anordnung und Verknüpfung ausgedrückt werden, wobei die Eingangssignale der Steuerung die Eingangssignale der Gatter darstellen, und die Ausgangssignale der Gatter die Ausgangssignale der Steuerung, welche auch Laststeuersignale darstellen.

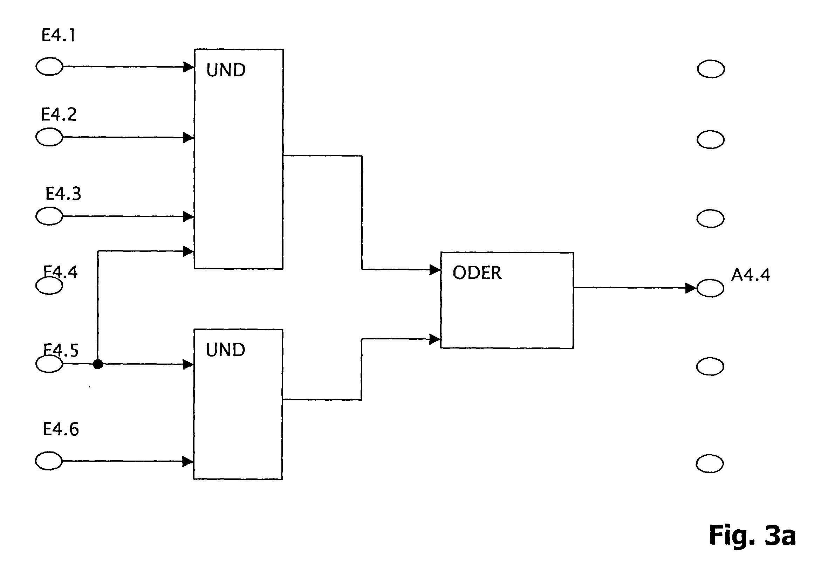

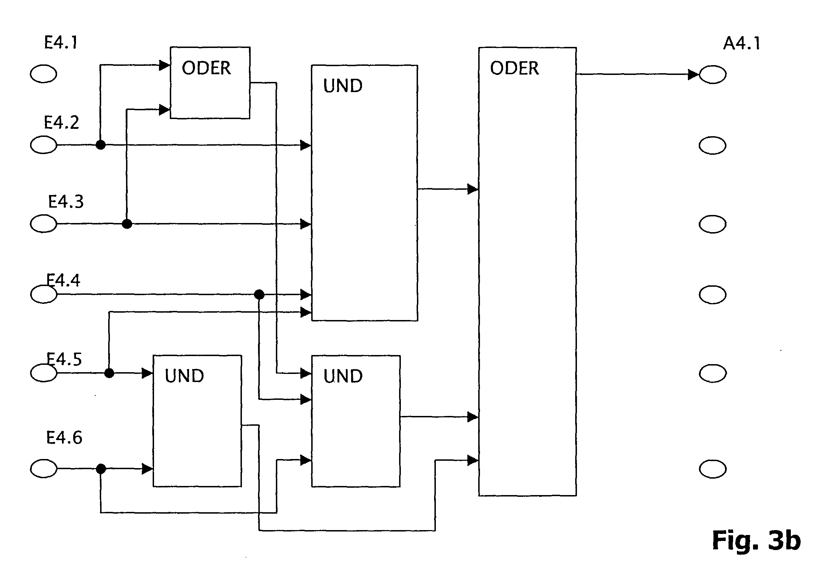

Dies ist in den Figuren 3a und 3b angedeutet. In den Figuren wird als Konvention angenommen, dass ein Signal des Werts 1 an einem Eingang eine eingeschaltete Lastverbrauchsvorrichtung anzeigt, und ein Signal des Werts 1 am Ausgang ein Hemmsignal für die damit verbundene Lastverbrauchsvorrichtung. Die Bezugszeichen E4.1 - E4.6 bezeichnen Eingänge der Steuerung 4, welche jeweiligen Verbrauchern 2.1 - 2.6 zugeordnet sind (also mit den Eingabeelementen 1.1 - 1.6 oder direkt mit entsprechenden Signalquellen in den Verbrauchern verbunden sind, welche Signale entsprechend der obigen Konvention liefern) und die Bezugszeichen A4.1 - A4.6 bezeichnen Ausgänge der Steuerung 4, welche Laststeuersignale an entsprechende Schalter 3.1 - 3.6 (oder auch direkt an die Verbraucher ausgeben) ausgeben. Fig. 3a zeigt ein Beispiel, bei dem ein Laststeuersignal für den Lastverbraucher 2.4 erzeugt wird (Ausgang A4.4). Wie man sieht, sind die Eingänge logisch so verknüpft, dass eine Schwelllastüberschreitung durch die Vorrichtung 2.4 nicht möglich ist. Fig. 3b zeigt ein entsprechendes Beispiel für die Steuerung der Vorrichtung 2.1 (Ausgang A4.1).

Natürlich sind dies nur einfache Beispiele. In diesem Zusammenhang ist auch ersichtlich, dass nicht nur Signaleingänge betreffend den Betriebszustand von Lastverbrauchsvorrichtungen vorgesehen sein können, sondern auch von externen Signalgebern, wie z.B. von einem Dämmerungsschalter. So kann z.B. der Ausgang für einen Lichtschalter so mit dem das Signal des Dämmerungsschalters empfangenden Eingangsanschluss der Steuerung verknüpft sein, dass nur bei Unterschreiten eines bestimmten Lichtniveaus eine Einschaltung der Beleuchtung zugelassen wird.

Ein weiteres wichtiges Merkmal, das in die Programmierung der Steuerung einbezogen sein kann, ist das Vorsehen von Verzögerungen zwischen der Betätigung eines Betriebsschalters an einem Lastverbraucher und der Zuführung von Strom. In anderen Worten, die Steuerung 4 kann so ausgebildet sein, dass bei Vorliegen eines bestimmten Gesamtzustands (ausgedrückt durch die Betriebszustandsignale) der Wunsch, einen weiteren Lastverbraucher einzuschalten, zu einer zeitlich verzögerten Einschaltung führt, sei es unter zeitweiliger Ausschaltung anderer Lastverbraucher, oder unter vollständiger Beibehaltung des bisherigen Gesamtzustands.

Ein Beispiel hierfür ist die Schaltung von Beleuchtungsanlagen. Es ist bekannt, dass Leuchtstoffröhren im Augenblick ihrer Zündung einen sehr hohen Leistungsverbrauch aufweisen, welcher dann sehr schnell abnimmt. Es ist somit möglich, dass eine Spitze, die eine Schwelllastüberschreitung bewirkt, durch die gleichzeitige Einschaltung aller Leuchtkörper einer Beleuchtungsanlage bewirkt wird. Dies kann im Rahmen der vorliegenden Erfindung dadurch vermieden werden, dass Beleuchtungskörper der Beleuchtungsanlage zu mehreren Lastverbrauchern gruppiert werden, welche dann von der Steuerung zeitlich verzögert eingeschaltet werden. In anderen Worten, wenn man z.B. eine Beleuchtungsanlage annimmt, welche 100 Leuchtstoffröhren aufweist, dann könnten diese 100 Leuchtstoffröhren in 4 x 25 Röhren aufgeteilt werden, und die Betätigung eines Hauptschalters (der z.B. über einen gesonderten Eingang mit der Steuerung verbunden ist, siehe z.B. Element 52 in Fig. 1) im Programm der Steuerung einen Vorgang auslösen, bei dem zunächst nur die erste Gruppe eingeschaltet wird, um nach einer bestimmten Verzögerungszeit (die entsprechend Messungen an der Leuchtstoffröhren-Gruppe bestimmt wird und so gewählt ist, dass die Einschaltspitze abgeklungen ist) die zweite Gruppe einzuschalten, dann wieder die vorbestimmte Verzögerungszeit zu warten, um dann die dritte Gruppe einzuschalten, woraufhin wiederum die Verzögerungszeit abgewartet wird, bis schließlich die vierte Gruppe eingeschaltet wird.

Das Vorsehen solcher zeitlichen Verzögerung ist natürlich nicht auf Beleuchtungsanlagen beschränkt, sondern kann grundsätzlich mit allen elektrischen Lastverbrauchern eingesetzt werden. Die Einzelheiten eines solchen Einsatzes hängen von den Gegebenheiten des Einzelfalls ab (Art der Lastverbraucher, Art der Gesamtanlage, Zielvorgaben, usw.), die der Fachmann dann im Rahmen seines Fachwissens umsetzen wird.

Experimente haben gezeigt, dass mit dem erfindungsgemäßen System eine Senkung des durchschnittlichen Energieverbrauchs um mehr als 25% erzielbar ist. Hieran zeigt sich, dass die vorliegende Erfindung nicht nur zur Vermeidung von Schwelllastüberschreitungen einsetzbar ist, sondern allgemein zur Energieeinsparung dienen kann.

## Patentansprüche

1. Vorrichtung zur Verteilung von elektrischer Last auf eine Vielzahl von Lastverbrauchsvorrichtungen, umfassend
eine Einrichtung zur Bereitstellung von Informationen betreffend den Betriebszustand jeder Lastverbrauchsvorrichtung, und
eine Steuereinrichtung, welche mit der Einrichtung zur Bereitstellung von Informationen verbunden ist, um die Informationen zu empfangen, und welche ausgebildet ist abhängig von dem durch die Informationen definierten Gesamtzustand und ohne direkte Messung der tatsächlichen Last Laststeuersignale zur Beeinflussung des Betriebszustands zumindest eines Teils der Lastverbrauchsvorrichtungen zu erzeugen.

2. Vorrichtung nach Anspruch 1, **dadurch gekennzeichnet, dass** die Einrichtung zur Bereitstellung von Informationen Sensoren umfasst, die das Ein/Ausschalten zumindest eines Teils der Lastverbrauchsvorrichtungen erfassen.

3. Vorrichtung nach Anspruch 2, **dadurch gekennzeichnet, dass** die Sensoren Lastabwurfrelais sind, welche jeweils in den Stromkreis einer zugehörigen Lastverbrauchsvorrichtung geschaltet sind.

4. Vorrichtung nach einem der Ansprüche 1 bis 3, **dadurch gekennzeichnet, dass** die Einrichtung zur Bereitstellung von Informationen Zustandsignal-Ausgabeelemente umfasst, welche in zumindest einem Teil der Lastverbrauchsvorrichtungen angeordnet sind und dafür ausgebildet sind Signale auszugeben, welche den Betriebszustand der betreffenden Lastverbrauchsvorrichtung wiedergeben.

5. Vorrichtung nach Anspruch 4, **dadurch gekennzeichnet, dass** die Zustandsignal-Ausgabeelemente über einen Datenbus mit der Steuereinrichtung verbunden sind.

6. Vorrichtung nach einem der Ansprüche 1 bis 5, **dadurch gekennzeichnet, dass** die Steuereinrichtung eine speicherprogrammierbare Steuerung ist, und die Laststeuersignale mit Hilfe eines gespeicherten Programms erzeugt.

7. Vorrichtung nach einem der Ansprüche 1 bis 6, **dadurch gekennzeichnet, dass** die Steuereinrichtung mit Stromkreisunterbrechungs-Schaltern verbunden ist, welche jeweils in den Stromkreis einer zugehörigen Lastverbrauchvorrichtung geschaltet sind, und welche angeschlossen sind die Laststeuersignale zu empfangen, um ansprechend auf die Laststeuersignale den Stromkreis zu öffnen oder zu schließen.

8. Vorrichtung nach Anspruch 7, **dadurch gekennzeichnet, dass** die Stromkreisunterbrechungs-Schalter steuerbare Schütze sind.

9. Vorrichtung nach einem der Ansprüche 1 bis 8, **dadurch gekennzeichnet, dass** die Steuereinrichtung mit zumindest einem Teil der Lastverbrauchsvorrichtungen verbunden ist, um Laststeuersignale an diese auszugeben.

10. Vorrichtung nach Anspruch 9, **dadurch gekennzeichnet, dass** die Laststeuersignale über einen Datenbus ausgegeben werden.

11. Vorrichtung nach einem der Ansprüche 1 bis 10, **dadurch gekennzeichnet, dass** Beleuchtungskörper einer Beleuchtungsanlage so gruppiert sind, dass sie eine vorbestimmte Zahl von Lastverbrauchsvorrichtungen bilden.

12. Vorrichtung nach einem der Ansprüche 1 bis 11, **dadurch gekennzeichnet, dass** die Steuerung so ausgebildet ist, dass für vorbestimmte Lastverbrauchvorrichtungen eine vom Gesamtzustand abhängige verzögerte Zuschaltung vorgesehen ist.

13. Vorrichtung nach einem der Ansprüche 1 bis 12, **dadurch gekennzeichnet, dass** die Lastverbrauchsvorrichtungen elektrische Anlagen in einem Gewerbebetrieb sind.

14. Vorrichtung nach einem der Ansprüche 1 bis 12, **dadurch gekennzeichnet, dass** die Lastverbrauchsvorrichtungen definierte Stromanschlüsse in einem Haushalt sind.

15. Vorrichtung nach einem der Ansprüche 1 bis 12, **dadurch gekennzeichnet, dass** die Lastverbrauchsvorrichtungen Einzelhaushalte in einem an eine Verteilerstation angeschlossenen Wohngebiet sind.

16. Verfahren zur Verteilung von elektrischer Last auf eine Vielzahl von Lastverbrauchsvorrichtungen, umfassend
Bereitstellung von Informationen betreffend den Betriebszustand jeder Lastverbrauchsvorrichtung, und
Erzeugung von Laststeuersignalen zur Beeinflussung des Betriebszustands zumindest eines Teils der Lastverbrauchsvorrichtungen, abhängig von dem durch die Informationen definierten Gesamtzustand und ohne direkte Messung der tatsächlichen Last.

17. Verfahren nach Anspruch 16, **dadurch gekennzeichnet, dass** die Informationen durch Sensoren bereitgestellt wird, die das Ein/Ausschalten zumindest eines Teils der Lastverbrauchsvorrichtungen erfassen.

18. Verfahren nach Anspruch 16, **dadurch gekennzeichnet, dass** die Sensoren Lastabwurfrelais sind, welche jeweils in den Stromkreis einer zugehörigen Lastverbrauchsvorrichtung geschaltet sind.

19. Verfahren nach einem der Ansprüche 16 bis 18, **dadurch gekennzeichnet, dass** die Informationen durch Zustandsignal-Ausgabeelemente bereitgestellt werden, welche in zumindest einem Teil der Lastverbrauchsvorrichtungen angeordnet sind und dafür ausgebildet sind Signale auszugeben, welche den Betriebszustand der betreffenden Lastverbrauchsvorrichtung wiedergeben.

20. Verfahren nach Anspruch 19, **dadurch gekennzeichnet, dass** die Zustandsignal-Ausgabeelemente über einen Datenbus mit der Steuereinrichtung verbunden sind.

21. Verfahren nach einem der Ansprüche 16 bis 20, **dadurch gekennzeichnet, dass** die Laststeuersignale mit Hilfe eines gespeicherten Programms in einer speicherprogrammierbaren Steuerung erzeugt werden.

22. Verfahren nach einem der Ansprüche 16 bis 21, **dadurch gekennzeichnet, dass** Stromkreisunterbrechungs-Schalter vorgesehen sind, welche jeweils in den Stromkreis einer zugehörigen Lastverbrauchvorrichtung geschaltet sind, und welche angeschlossen sind die Laststeuersignale zu empfangen, um ansprechend auf die Laststeuersignale den Stromkreis zu öffnen oder zu schließen.

23. Verfahren nach Anspruch 22, **dadurch gekennzeichnet, dass** die Stromkreisunterbrechungs-Schalter steuerbare Schütze sind.

24. Verfahren nach einem der Ansprüche 16 bis 23, **dadurch gekennzeichnet, dass** die Laststeuersignale an zumindest einen Teil der Steuereinrichtung Lastverbrauchsvorrichtungen ausgegeben werden.

25. Verfahren nach Anspruch 24, **dadurch gekennzeichnet, dass** die Laststeuersignale über einen Datenbus ausgegeben werden.

26. Verfahren nach einem der Ansprüche 16 bis 25, **dadurch gekennzeichnet, dass** Beleuchtungskörper einer Beleuchtungsanlage so gruppiert sind, dass sie eine vorbestimmte Zahl von Lastverbrauchsvorrichtungen bilden.

27. Verfahren nach einem der Ansprüche 16 bis 26, **dadurch gekennzeichnet, dass** die Steuerung so ausgebildet ist, dass für vorbestimmte Lastverbrauchvorrichtungen eine vom Gesamtzustand abhängige verzögerte Zuschaltung vorgesehen ist.

28. Verfahren nach einem der Ansprüche 16 bis 27, **dadurch gekennzeichnet, dass** die Lastverbrauchsvorrichtungen elektrische Anlagen in einem Gewerbebetrieb sind.

29. Verfahren nach einem der Ansprüche 16 bis 27, **dadurch gekennzeichnet, dass** die Lastverbrauchsvorrichtungen definierte Stromanschlüsse in einem Haushalt sind.

30. Verfahren nach einem der Ansprüche 16 bis 27, **dadurch gekennzeichnet, dass** die Lastverbrauchsvorrichtungen Einzelhaushalte in einem an eine Verteilerstation angeschlossenen Wohngebiet sind.
